# EUROPÄISCHE PATENTSCHRIFT

(11) **EP 3 468 744 B1**
(45) Veröffentlichungstag und Bekanntmachung des Hinweises auf die Patenterteilung: **11.05.2022**
(21) Anmeldenummer: 17729451.9
(22) Anmeldetag: 08.06.2017
(51) Int. Cl.: B23Q 11/00

(54) **BEARBEITUNGSVORRICHTUNG MIT EINER SCHWINGUNGSDÄMPFUNGSVORRICHTUNG UND VERFAHREN**
MACHINING DEVICE HAVING A VIBRATION-DAMPING DEVICE, AND METHOD
DISPOSITIF D'USINAGE DOTÉ D'UN DISPOSITIF AMORTISSEUR DE VIBRATIONS ET PROCÉDÉ

(30) Priorität: 09.06.2016 DE 102016210233
(43) Veröffentlichungstag der Anmeldung: 17.04.2019
(73) Patentinhaber: HOMAG GmbH, 72296 Schopfloch (DE)
(72) Erfinder: STURM, Christian, 72202 Nagold (DE); SEKINGER, Philipp, 78733 Aichhalden (DE)
(74) Vertreter: Hoffmann Eitle
(86) Internationale Anmeldenummer: PCT/EP2017/063955
(87) Internationale Veröffentlichungsnummer: WO 2017/211949

(56) Entgegenhaltungen:
- EP-A2- 2 600 027
- JP-A- S6 268 275
- JP-A- 2007 152 460
- US-A1- 2007 243 033

## Beschreibung

### Gebiet der Erfindung

Die Erfindung betrifft eine Bearbeitungsvorrichtung, insbesondere CNC-Bearbeitungsmaschine, zur Bearbeitung von bevorzugt plattenförmigen Werkstücken, sowie ein Verfahren.

### Stand der Technik

Im Bereich der Bearbeitungsvorrichtungen müssen heutzutage eine Vielzahl an unterschiedlichen Bearbeitungsmöglichkeiten angeboten und geleistet werden. D.h., das Anforderungsprofil an Bearbeitungsvorrichtungen ist oft ein Spagat zwischen Bearbeitungsvorgängen, bei denen ein relativ kleines Werkzeug bei einer relativ hohen Drehzahl einerseits, und anderseits Bearbeitungsvorgänge, bei denen ein relativ großes Werkzeug, mit hoher Masse und großem Werkzeugdurchmesser bei geringer Drehzahl betrieben wird. Bei den kleinen Werkzeugen wird hierbei eine Werkzeugaufnahme benötigt, die bei sehr hohen Drehzahlen (z.B. 24.000 min⁻¹) betrieben werden kann. Bei großen Werkzeugen hingegen wird eine hohe Steifigkeit der Werkzeugaufnahme benötigt, die die Prozesskräfte, wie z.B. Biegemomente, Radialkräfte, Zerspanungskräfte, usw., die bei geringen Drehzahlen für gewöhnlich sehr groß sind, aufnehmen kann. Da im Allgemeinen Werkzeugaufnahmen für hohe Drehzahlen und Werkzeugaufnahmen für hohe Prozesskräfte unterschiedlich dimensioniert sind, besteht ein Zielkonflikt, womit den jeweiligen Anforderungen lediglich im Rahmen von Kompromisslösungen unbefriedigend Rechnung getragen werden kann. Zusätzlich werden die eingesetzten Werkzeuge immer leistungsstärker, was es auf der einen Seite zwar möglich macht, selbst bei großen Werkzeugen mit hohen Prozesskräften die Drehzahl zu steigern, aber andererseits dazu führt, dass die Anforderungen an die Bearbeitungsvorrichtung, insbesondere in Hinblick auf entstehende Schwingungen, steigen.

Entsprechend besteht bei bekannten Bearbeitungsvorrichtungen das Problem, dass die Werkzeugaufnahme bzw. das Bearbeitungsaggregat nicht optimal für jedes Werkzeug ausgelegt werden kann, und entsprechend bei der Bearbeitung eines Werkstücks unerwünschte Schwingungen in der Werkzeugaufnahme entstehen können, insbesondere Schwingungen, die der Eigenform der Grundmaschine entsprechen. Dies ist insbesondere bei CNC-Bearbeitungsmaschinen problematisch, bei denen das Bearbeitungsaggregat samt Werkzeugaufnahme oft an mehrachsigen Linearführungen aufgehängt ist, was die Steifigkeit der Aufhängung reduziert und es den erzeugten Schwingungen ermöglicht, sich bis zu einem Maschinengestell, insbesondere bis zu einem Maschinenbett der Bearbeitungsmaschine durch Resonanz aufzuschwingen. Dies führt zu einer stärkeren Beanspruchung der CNC-Bearbeitungsmaschine sowie des Werkzeugs und reduziert die Bearbeitungsqualität. Gleiches Problem besteht jedoch auch bei gängigen Durchlaufmaschinen, da auch bei diesen die Leistungsanforderungen ständig steigen.

Aus diesem Grund besteht das Bestreben, Schwingungsdämpfungsvorrichtungen für Bearbeitungs-vorrichtungen, insbesondere für Bearbeitungsaggregate von CNC-Bearbeitungsmaschinen, bereitzustellen.

Ähnliche Probleme bestehen im Bereich der Druck-, Textil- oder Zeitungsmaschinentechnik, bei denen Aufgrund der sehr hohen Drehzahl bei z.B. Druckwalzen oder Umlenkwellen Schwingungen entstehen, die im Falle einer Überlagerung mit der Eigenfrequenz bis hin zu einer Beschädigung der Lager führen können. Die DE 10 2008 050 989 A1 lehrt daher zum Beispiel eine Bearbeitungsvorrichtung nach dem Oberbegriff des Anspruchs 1 mit einem gedämpften Tilger zur Reduzierung von Schwingungen eines hohl gefertigten Maschinenteils wie beispielsweise einer Welle, einer Walze oder eines Dorns. Der gedämpfte Tilger ist aus einer Zusatzmasse und einem dämpfenden und einem elastischen Element aufgebaut. Die Zusatzmasse wird von einer dämpfenden- und elastischen zylinderförmigen Schicht umgeben. Um die erforderlichen Parameter wie Steifigkeit und Dämpfungskoeffizient bei einer vorgegebenen Zusatzmasse und einem bestimmten Hauptsystem zu erreichen, muss ein definierter Druck auf die elastische und dämpfende Schicht ausgeübt werden. Dies macht eine besondere Konstruktion erforderlich, die es erlaubt den Tilger in ein zylinderförmiges Hauptsystem, wie beispielsweise einen Dorn, zu integrieren.

Ferner sind aus dem Bereich der Werkzeugmaschinen aktive Schwingungsdämpfungssysteme bekannt, die in der Werkzeugaufnahme installiert sind. Bei den bekannten aktiven Schwingungsdämpfungssystemen wird anhand eines Beschleunigungsaufnehmers, der direkt an der Werkzeugaufnahme befestigt ist, die Schwingungsamplitude einer während der Bearbeitung eines Werkstücks entstehenden Schwingung erfasst, und entsprechend der erfassten Schwingungsamplitude mittels eines elektrodynamischen Aktuators ein Gegenimpuls erzeugt. Dies erfordert jedoch für jede Raumrichtung, in der eine Schwingungskompensation erfolgen soll, die Installation eines Beschleunigungsaufnehmers sowie eines elektrodynamischen Aktuators, sowie die Bereitstellung einer aufwendigen Steuerung zur Schwingungskompensation. Dies führt zu hohen Anschaffungskosten eines derartigen Schwingungsdämpfungs-systems, was es in vielen Fällen wirtschaftlich uninteressant macht. Ferner ist der Einsatz aufgrund der notwendigen Aktuatoren auf größere Bearbeitungsmaschinen beschränkt, da ansonsten das Eigengewicht der Aktuatoren die Trägheitsmasse des Bearbeitungsaggregats zu sehr beeinflusst.

Als weiterer Stand der Technik ist die JP 2007-152 460 A zu nennen, welche eine Schleifmaschine 10 betrifft, bei der eine passive Schwingungssteuervorrichtung oberhalb eines Schleifscheibenkopfes nahe einer Schleifscheibe oberhalb einer Schleifscheibenspindel angebracht ist. Vibrationen des Schleifscheibenkopfes werden während des Schleifens durch die passive Schwingungssteuervorrichtung gedämpft, so dass eine Bodenbearbeitung ohne Rattermarken durchgeführt werden kann. Des Weiteren lehrt die JP S62-68275 A eine Schleifscheibe, die an einem Schleifsteinwellenkopf mittels einer Blattfeder befestigt ist und bei der zwischen dem Schleifsteinwellenkopf und einem Schleifsteindeckel ein Dämpfer angeordnet ist. Die Federkonstante der Blattfeder, die Masse der Schleifsteinabdeckung und der schwingungsabsorbierende Zustand des Dämpfers werden entsprechend der Eigenfrequenz der Schleifmaschine eingestellt, wodurch es möglich ist, das Auftreten von Vibrationen in der Nähe der Schleifscheibe wirksam zu reduzieren. Ferner beschreibt die EP 2 600 027 A2 einen abgestimmten Massendämpfer für einen Werkzeugkopf und die US 2007/243033 A1 offenbart eine Rüttelschwingungs-Verhinderungsvorrichtung für eine Werkzeugmaschine.

### Darstellung der Erfindung

Aufgabe vorliegender Erfindung ist es daher, eine Bearbeitungsvorrichtung, insbesondere CNC-Bearbeitungsmaschine zur Bearbeitung von bevorzugt plattenförmigen Werkstücken, bereitzustellen, mit der Schwingungen an einem Bearbeitungsaggregat mittels eines einfachen Aufbaus kostengünstig gedämpft werden können.

Die Aufgabe wird gelöst durch eine Bearbeitungsvorrichtung nach Anspruch 1 sowie ein Verfahren nach Anspruch 10. Bevorzugte Weiterbildungen der Erfindung sind in den abhängigen Ansprüchen angegeben.

Einer der Kerngedanken der vorliegenden Erfindung ist es, Schwingungen eines dynamischen Elements eines Bearbeitungsaggregates, insbesondere einer drehbaren Werkzeugspindel, die während der Bearbeitung eines Werkstücks entstehen, mittels einer Schwingungsdämpfungsvorrichtung passiv zu dämpfen, insbesondere zu tilgen und passiv zu dämpfen.

Mittels der vorgeschlagenen Schwingungsdämpfungsvorrichtung ist es anhand eines einfachen Vorrichtungsaufbau auf kostengünstige Weise möglich, Schwingungen eines dynamischen Elements eines Bearbeitungsaggregates, insbesondere einer drehbaren Werkzeugspindel, die während der Bearbeitung eines Werkstücks entstehen, passiv zu dämpfen. Hierdurch kann auf eine komplizierte Steuerung eines aktiven Dämpfungselements sowie der dazu notwendigen Sensoren und Aktuatoren verzichtet werden, was die Herstellungskosten der vorgeschlagenen Schwingungsdämpfungsvorrichtung im Vergleich zu bekannten Systemen sowie die Komplexität drastisch senkt.

Gemäß der vorliegenden Erfindung weist die Bearbeitungsvorrichtung, insbesondere die CNC-Bearbeitungsmaschine, zur Bearbeitung von bevorzugt plattenförmigen Werkstücken, die bevorzugt zumindest abschnittsweise aus Holz, Holzwerkstoff, Kunststoff und/oder Glas bestehen, ein Bearbeitungsaggregat mit einem dynamischen Element, das bevorzugt eine drehbare Werkzeugspindel umfasst, eine erste Führungsanordnung, mittels der das Bearbeitungsaggregat in einer Raumrichtung verfahrbar ist, und mindestens eine Schwingungsdämpfungsvorrichtung auf, wobei mittels der mindestens einen Schwingungsdämpfervorrichtung Schwingungen des dynamischen Elements passiv dämpfbar sind. Bei den zu bearbeitenden Werkstücken kann es sich auch um stabförmige oder kubische Werkstücke sowie Freiformkörper und dergleichen handeln.

Auf diese Weise wird eine Schwingungsdämpfungsvorrichtung bereitgestellt, mit der z.B. bei einer CNC-Bearbeitungsmaschine als ein konkretes Beispiel einer Bearbeitungsvorrichtung auf einfache und kostengünstige Weise Schwingungen eines dynamischen Elements, insbesondere der Werkzeugspindel des Bearbeitungsaggregates der CNC-Bearbeitungsmaschine, die insbesondere während der Bearbeitung eines Werkstücks entstehen, passiv gedämpft werden können.

Gemäß einer Ausführungsform der vorliegenden Erfindung ist die mindestens eine Schwingungsdämpfungsvorrichtung auf der dem dynamischen Element zugewandten Seite der ersten Führungsanordnung oder an der ersten Führungsanordnung selbst vorgesehen.

Die dadurch bereitgestellte Schwingungsdämpfungsvorrichtung ist insbesondere in der Lage, die Schwingungen so nahe wie möglich zu dem Entstehungsort der Schwingungen zu dämpfen. Dadurch, dass die Schwingungsdämpfungsanordnung auf der dem dynamischen Element zugewandten Seite der ersten Führungsanordnung vorgesehen ist, können auftretende Schwingungen noch vor dem Erreichen der ersten Führungsanordnung gedämpft werden. Damit kann eine Ausbreitung der Schwingungen und das damit verbundene Aufschwingen aufgrund von Resonanz vermieden werden.

Gemäß einer Ausführungsform der vorliegenden Erfindung handelt es sich bevorzugt bei der mindestens einen Schwingungsdämpfungsvorrichtung der Bearbeitungsvorrichtung um eine Schwingungstilgervorrichtung (gedämpfter Tilger), die zumindest ein Dämpfungselement, eine Hilfsmasse und ein elastisches Stützelement umfasst. Hiermit ist es möglich, das dynamische Element nicht nur passiv zu dämpfen, sondern die entstehenden Schwingungen zu tilgen und passiv zu dämpfen.

Hierbei kann das elastische Stützelement das zumindest eine Dämpfungselement und die Hilfsmasse tragen, wobei bevorzugt das elastische Stützelement direkt an dem dynamischen Element oder an der ersten Führungsebene befestigt ist. Es besteht auch die Möglichkeit, das zumindest eine Dämpfungselement an der Hilfsmasse zu befestigen.

Im Allgemeinen sind passive Schwingungsdämpfer/-tilger aus dem Bereich der Konstruktion von Hochhäusern und Brücken bekannt, wie z.B. der Millenium-Brücke in London, der Rheinbrücke in Kehl-Straßburg sowie dem Wolkenkratzer Taipei 101 in Taiwan. Hierbei wird grundsätzlich ein Dämpfungselement in einem elastischen Stützelement (z.B. Gehäuse) aufgenommen und zu einem dynamischen Element (z.B. Hochhaus) positioniert. Damit das Dämpfungselement in Position bleibt und nicht mit der kritischen Frequenz des dynamischen Elements (z.B. der Schwingung eines Hochhauses im Fall eines Erdbebens) mitschwingt, wird das elastische Stützelement mit einer entsprechend großen Hilfsmasse bestückt. Diese Hilfsmasse bewirkt, dass aufgrund der Trägheit der Hilfsmasse das elastische Stützelement samt Dämpfungselement in seiner vorgesehenen Position verharrt und entsprechend es dem Dämpfungselement ermöglicht eine Dämpfungskraft (Dämpfungswirkung) auf das dynamische Element auszuwirken. Konkret bedeutet das, dass das dynamische Element (auch Schwingungserreger genannt) bei einer relativ hohen kritischen Frequenz innerhalb des elastischen Stützelements schwingt, während das elastische Stützelement samt Hilfsmasse mit einer relativ niedrigen Frequenz schwingt, ohne von der kritischen Frequenz angeregt zu werden.

Wird das elastische Stützelement direkt an dem dynamischen Element befestigt, ist es notwendig, dass das elastische Stützelement eine ausreichend hohe Elastizität aufweist, um eine Anregung der Hilfsmasse mit der kritischen Frequenz des dynamischen Elements zu unterbinden. Es besteht jedoch hierdurch die Möglichkeit, die Schwingungsdämpfungsvorrichtung äußerst kompakt und sehr nahe zu dem Entstehungsort der Schwingungen anzuordnen. Damit wird es ermöglicht, die entstehenden Schwingungen zu dämpfen, bevor sie sich über weite Bereiche der Bearbeitungsvorrichtung ausbreiten und gegebenenfalls sich aufgrund von Resonanz eine Schwingungserhöhung aufbaut. Da in der Regel die Verbindung zwischen Bearbeitungsaggregat und Führungsanordnung äußerst steif ausgebildet ist, ist auch im Fall einer Befestigung des elastischen Stützelements an der Führungsanordnung eine ausreichend hohe Elastizität des Stützelements gefordert.

Bevorzugt wirkt die Dämpfungskraft des zumindest einen Dämpfungselements direkt auf das dynamische Element oder die Dämpfungskraft des zumindest einen Dämpfungselements wirkt mittelbar auf das dynamische Element. Unter mittelbar ist hierbei zu verstehen, dass das zumindest eine Dämpfungselement auf z.B. ein Aufhängungsteil, mittels dessen das dynamische Dämpfungselement bzw. das das dynamische Dämpfungselement umfassende Bearbeitungsaggregat an der Führungsanordnung befestigt ist, wirkt. D.h., die Dämpfungskraft des zumindest einen Dämpfungselement greift z.B. an dem Aufhängungsteil an und dämpft somit indirekt die Schwingung des dynamischen Elements.

Gemäß einer bevorzugten Ausführungsform der vorliegenden Erfindung kann das zumindest eine Dämpfungselement in Form eines hydraulischen Stoßdämpfers, eines mechanischen Stoßdämpfers, eines Wirbelstromdämpfers, eines elektromechanischen Wandlerwerkstoffes, einem hydraulischen Dämpfungsspalts oder dergleichen ausgebildet sein. Auf einzelne Typen wird später noch konkreter eingegangen.

Des Weiteren kann die erste Führungsanordnung eine Führungsvorrichtung umfassen, die bevorzugt in Form einer Linearführung ausgebildet ist. Hierbei kann die Führungsvorrichtung einen Führungsschlitten aufweisen, an dem das Bearbeitungsaggregat samt dem dynamischen Element befestigt ist, um das Bearbeitungsaggregat in einer Raumrichtung verfahrbar zu führen, wobei die Raumrichtung beliebig im Raum liegen kann. Derartige Führungsvorrichtungen werden insbesondere bei CNC-Bearbeitungsmaschinen sowie Durchlaufmaschinen eingesetzt, um das Werkzeug bevorzugt in allen drei Raumrichtungen verfahren zu können. Führungsvorrichtungen bringen jedoch den Nachteil mit sich, dass die Steifigkeit der Aufhängung des Bearbeitungsaggregates reduziert wird, womit die Aufhängung hinsichtlich Schwingungen, insbesondere dem Aufbau von Schwingungserhöhung anfälliger ist. Da die Schwingungsdämpfungsvorrichtung gemäß der vorliegenden Ausführungsform jedoch auf der Seite der Führungsanordnung liegt, die dem dynamischen Element zugewandt ist, können die Schwingungen getilgt und gedämpft werden, bevor sie die Führungsvorrichtung erreichen.

Gemäß der vorliegenden Erfindung besteht auch die Möglichkeit, die Schwingungsdämpfungsvorrichtung an dem Führungsschlitten der Führungsvorrichtung vorzusehen, womit die Schwingungsdämpfungsvorrichtung noch auf der Seite der Führungsvorrichtung liegt, die dem dynamischen Element zugewandt ist. Führungsschienen der Führungsvorrichtung und ein Maschinengestell, an dem z.B. die Führungsschienen befestigt sind, sind hingegen auf der Seite der Führungsvorrichtung angeordnet, die von dem dynamischen Element abgewandt ist. Anhand dieser Anordnung ist es möglich, die Massenschwerpunkt der Schwingungsdämpfungsvorrichtung näher an die Führungsvorrichtung zu bringen, und somit die Trägheit des Bearbeitungsaggregates weniger zu beeinflussen. Andererseits können jedoch die kritischen Schwingungen des dynamischen Elements nur mittelbar gedämpft werden, da die Dämpfungskraft des mindesten einen Dämpfungselements nicht direkt an dem dynamischen Element angreift.

Gemäß einer weiteren bevorzugten Ausführungsform vorliegender Erfindung ist es möglich, die Schwingungsdämpfungsvorrichtung in der Werkzeugspindel des Bearbeitungsaggregates zu integrieren. Anhand dieser Ausbildung wird also die Schwingungsdämpfungsvorrichtung direkt in das dynamische Element eingebaut. In diesem Fall weist die Werkzeugspindel ein zylinderförmiges Innenteil und ein hohlzylinderförmiges Außenteil auf, wobei das Außenteil auf dem Innenteil gelagert ist. Bei dieser Ausbildung entspricht das zylinderförmige Innenteil dem dynamischen Element (Schwingungserreger) und das hohlzylinderförmige Außenteil der Hilfsmasse und enthält das Dämpfungselement. Aufgrund des für gewöhnlich knappen Bauraums bietet sich die Ausbildung des Dämpfungselements in Form eines hydraulischen Dämpfungsspalts an.

Des Weiteren ist es bevorzugt, dass die Masse der Hilfsmasse und/oder die Dämpfungscharakteristik des Dämpfungselements und/oder die Steifigkeit des elastischen Stützelements einstellbar ist/sind. Besonders bevorzugt ist, dass die jeweilige Einstellung entsprechend den vorliegenden Bearbeitungsparametern, wie z.B. Vorschubgeschwindigkeit, Schnittgeschwindigkeit, Schnitttiefe, Schnittkraft, Drehzahl des Werkzeugs, und/oder Art des verwendeten Werkzeugs, und/oder gemessenen Schwingungsdaten usw., einstellbar ist/sind. Dies bietet den Vorteil, dass die Tilgung und passive Dämpfung optimal auf die auftretenden Schwingungen eingestellt werden kann, insbesondere kann die Einstellung derart vorgenommen werden, dass ein näherer Frequenzbereich um die Eigenform der Grundmaschine besonders gedämpft wird, womit eine Resonanz mit der Eigenform der Grundmaschine vermieden werden kann. Hierbei ist unter Grundmaschine der Teil der Maschine zu verstehen, der sich auf der dem dynamischen Element abgewandten Seite der Führungsanordnung befindet. Die Einstellung kann hierbei manuell, mechanisch oder motorisch erfolgen. Insbesondere hinsichtlich der Einstellung der Dämpfungscharakteristik des Dämpfungselements bietet sich die Verwendung eines Wirbelstromdäpfers oder eines elektromechanischen Wandlerwerkstoffs an, da deren Dämpfungskraft rein elektromechanisch einstellbar ist. Hierbei ist unter der Dämpfungscharakteristik zu verstehen, die aufbringbare Dämpfungskraft, die Dämpfungskonstante (wie schnell der Dämpfer der Schwingung folgen kann), linearer oder progressiver Dämpfer und dergleichen.

Ferner ist es bevorzugt, dass mindestens zwei Schwingungsdämpfungsvorrichtungen vorgesehen sind, welche zwei unterschiedliche Wirkrichtungen aufweisen, die in einer gemeinsamen Ebene liegen. Besonders bevorzugt sind die Schwingungsdämpfungsvorrichtungen um das dynamische Element herum angeordnet, was eine kompakte Ausbildung ermöglicht. Wird die Bearbeitungsvorrichtung mit zwei Schwingungsdämpfungsvorrichtungen die in einer gemeinsamen Ebene in unterschiedlichen Richtungen wirken, ist es möglich, auftretende Schwingungen in zwei Raumrichtungen zu dämpfen, was in Summe die Dämpfungswirkung erhöht, insbesondere wenn aufgrund von Bearbeitungsparametern sich die Richtung der auftretenden Schwingungsamplituden ändert.

Gemäß einer weiteren bevorzugten Ausführungsform ist die Bearbeitungsvorrichtung mit drei Schwingungsdämpfungsvorrichtungen versehen, welche drei unterschiedliche Wirkrichtungen aufweisen, und in zwei sich schneidenden Ebenen liegen. Ferner werden besonders bevorzugt die drei Schwingungsdämpfungsvorrichtungen um das dynamische Element herum angeordnet.

Auf diese Weise ist es möglich in drei Raumrichtungen auftretende Schwingungen zu dämpfen.

Des Weiteren betrifft die vorliegende Erfindung ein Verfahren zum Betreiben einer Bearbeitungsvorrichtung, insbesondere zum Betreiben einer wie oben beschriebenen Bearbeitungsvorrichtung, wobei anhand des Verfahrens Schwingungen eines dynamischen Elements eines Bearbeitungsaggregates, welches insbesondere eine drehbare Werkzeugspindel umfasst, die während der Bearbeitung eines Werkstücks entstehen bzw. auftreten, mittels einer Schwingungsdämpfungsvorrichtung passiv gedämpft werden, insbesondere getilgt und passiv gedämpft werden.

Gemäß einer bevorzugten Ausführungsform der vorliegenden Erfindung umfasst das Verfahren ferner: das Ermitteln von Bearbeitungsparametern, wie z.B. Vorschubgeschwindigkeit, Schnittgeschwindigkeit, Schnitttiefe, Schnittkraft, Drehzahl des Werkzeugs, Art des Werkzeugs, usw., und/oder das Ermitteln von durch das dynamische Element auftretender Schwingungen, bevorzugt anhand von Schwingungsaufnehmern, das Ermitteln von optimalen Einstellparametern der Schwingungsdämpfungsvorrichtung, wie z.B. Masse der Hilfsmasse, Dämpfungscharakteristik des Dämpfungselements, Steifigkeit des elastischen Stützelements, usw., und das Einstellen der optimalen Einstellparameter der Schwingungsdämpfungsvorrichtung.

Hierbei kann das Ermitteln der optimalen Einstellparameter der Schwingungsdämpfungsvorrichtung basierend auf den ermittelten Bearbeitungsparametern und/oder den ermittelten auftretenden Schwingungen erfolgen, wobei bevorzugt die ermittelten Bearbeitungsparameter und/oder ermittelten auftretenden Schwingungen mit empirisch ermittelten Werten verglichen werden und/oder anhand von Simulationen ermittelten Werten verglichen werden und entsprechend die optimalen Einstellparameter bestimmt werden.

Auf diese Weise kann z.B. zuerst die kritische Frequenz, die Eigenfrequenz (Eigenform) der Grundmaschine ermittelt werden, welch unabhängig von dem jeweilig eingesetzten Werkzeug und den jeweiligen Bearbeitungsparametern im Großen und Ganzen gleichbleibend ist. Anschließend können verschiedene Werkzeuge unter unterschiedlichen Bearbeitungsparametern im Einstellmodus betrieben werden, und die dadurch entstehenden Schwingungen im Testaufbau gemessen werden. Entsprechend den gemessenen Schwingungen können dann optimale Einstellungsparameter ermittelt und getestet werden. Die ermittelten, optimalen Einstellungsparameter können dann in einer Datenbank abgelegt werden, auf welche eine Standardmaschine unter Berücksichtigung des eingesetzten Werkzeugs und den jeweiligen Bearbeitungsparametern zurückgreifen kann und entsprechend die Einstellparameter (wie z.B. Masse der Hilfsmasse, Dämpfungscharakteristik des Dämpfungselements, Steifigkeit des elastischen Stützelements) der Schwingungsdämpfungsvorrichtung automatisch eingestellt werden können.

Bevorzugt kann hierbei das Einstellen der optimalen Einstellparameter manuell, motorisch oder elektromechanisch erfolgen.

### Kurze Beschreibung der Zeichnungen

- Figur 1: zeigt schematisch das Grundprinzip eines Schwinungs-Tilger-Dämpfungssystems gemäß einer Ausführungsform der vorliegenden Erfindung,
- Figur 2: zeigt eine perspektivische Darstellung einer Ausführungsform eines Bearbeitungsaggregates einer Bearbeitungsvorrichtung gemäß der vorliegenden Erfindung,
- Figur 3: zeigt schematisch eine erste Ausführungsform einer Schwingungsdämpfungsvorrichtung für eine Bearbeitungsvorrichtung gemäß der vorliegenden Erfindung,
- Figur 4: zeigt schematisch eine zweite Ausführungsform einer Schwingungsdämpfungsvorrichtung für eine Bearbeitungsvorrichtung gemäß der vorliegenden Erfindung,
- Figur 5: zeigt schematisch eine dritte Ausführungsform einer Schwingungsdämpfungsvorrichtung für eine Bearbeitungsvorrichtung, die nicht unter die vorliegende Erfindung fällt, und
- Figur 6: zeigt schematisch eine vierte Ausführungsform einer Schwingungsdämpfungsvorrichtung für eine Bearbeitungsvorrichtung gemäß der vorliegenden Erfindung.

### Detaillierte Beschreibung bevorzugter Ausführungsformen

Nachfolgend werden unter Bezugnahme auf die beigefügten Figuren bevorzugte Ausführungsformen der vorliegenden Erfindung beschrieben.

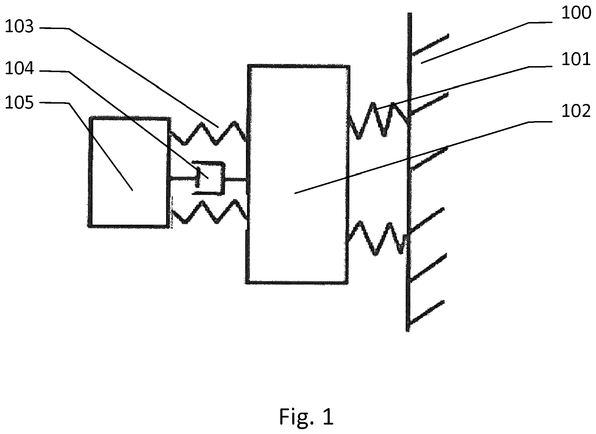

Fig. 1 zeigt schematisch das Grundprinzip eines Schwinungs-Tilger-Dämpfungssystems gemäß einer Ausführungsform der vorliegenden Erfindung. In Fig. 1 repräsentiert das Bezugszeichen (100) die erste Führungsanordnung (5), welche zur Vereinfachung der Darstellung als starres Element dargestellt ist. An dem starren Element (100) ist eine schwingende Masse (102) elastisch aufgehängt. Die elastischen Elemente (101) entsprechen hierbei der vorhandenen Elastizität der Aufhängung der Masse (102) . Die Masse (102) entspricht dem dynamischen Element (3) bzw. dem Schwingungserreger. An der schwingenden Masse (102) ist ein Hilfsmassendämpfer (HMD) bzw. ein Schwingungs-Tilger/Dämpfer-System gemäß der vorliegenden Erfindung vorgesehen. Das Schwingungs-Tilger/Dämpfer-System weist eine Hilfsmasse (105) auf, die mittels einem elastischen Element (103), entspricht dem Stützelement(9), an der schwingenden Masse (102) befestigt ist. Ferner weist das Schwingungs-Tilger/Dämpfer-System einen Dämpfer (104) auf, der den Dämpfungselementen (7) entspricht. Die Federkonstante der Elastizität (101) ist wesentlich höher als die Federkonstante des elastischen Elements (103). Somit ist die Masse (102) relativ steif an dem starren Element (100) befestigt, und andererseits die Hilfsmasse (105) relativ weich an der schwingenden Masse (102) befestigt, wodurch die Hilfsmasse (105) von den kritischen Schwingungen (Frequenzen) der schwingenden Masse (102) entkoppelt werden kann. Entsprechend verharrt der Dämpfer (104) relativ gesehen zu der schwingenden Masse (102) auf seiner Stelle, und kann somit eine dämpfende Kraft auf die schwingende Masse (102) ausführen.

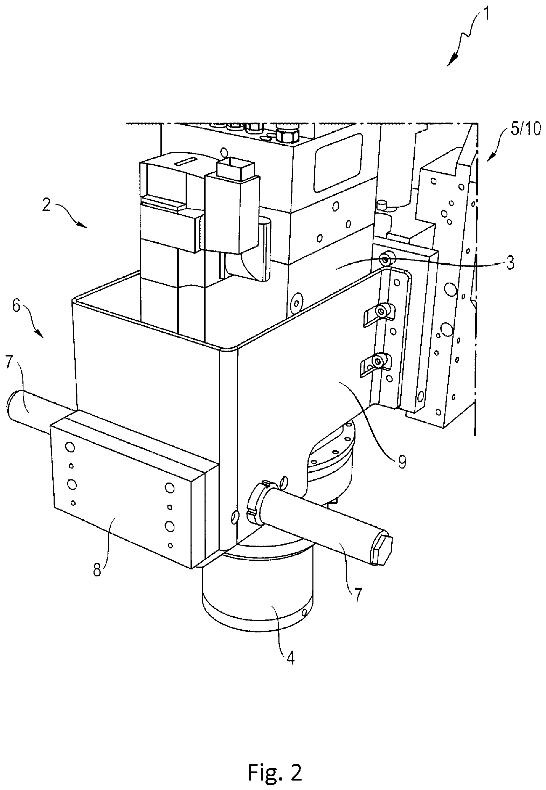

Fig. 2 zeigt eine perspektivische Darstellung einer Ausführungsform eines Bearbeitungsaggregates einer Bearbeitungsvorrichtung gemäß der vorliegenden Erfindung. Nachfolgend wird eine Ausführungsform der vorliegenden Erfindung beispielhaft anhand einer CNC-Bearbeitungsmaschine als ein konkretes Beispiel einer Bearbeitungsvorrichtung beschrieben. Wie vorher bereits erwähnt kann es sich hierbei jedoch auch um Bearbeitungsaggregate anderer Bearbeitungsvorrichtungen, wie z.B. von Durchlaufmaschinen, handeln. Wie dargestellt weist eine Bearbeitungsvorrichtung (1) im Allgemeinen ein Bearbeitungsaggregat (2), das eine Werkzeugspindel (4) umfasst, welche ein gewünschtes Werkzeug, wie z.B. einen Fräser, einen Bohrer, einen Schleifkopf, usw., aufnehmen kann, auf. Die Baugruppe des Bearbeitungsaggregates (2), die die Werkzeugspindel (4) drehbar aufnimmt und umfasst, wird nachfolgend dynamisches Element (3) genannt, da diese Baugruppe maßgeblich für die Entstehung und Einleitung von Schwingungen in die Bearbeitungsvorrichtung (1) verantwortlich ist. Das dynamische Element (3) wird auch oft als Schwingungserreger bezeichnet.

Hierbei können Schwingungen durch die Rotation der Werkzeugspindel (4) samt Werkzeug entstehen, z.B. aufgrund einer Unwucht an der Werkzeugspindel (4) oder dem Werkzeug, aufgrund von wechselnden Belastungen des Werkzeugs während der Bearbeitung eines Werkstücks und dergleichen.

Wie der Fig. 1 ebenfalls entnommen werden kann, weist die CNC-Bearbeitungsmaschine eine erste Führungsanordnung (5) auf, an der das Bearbeitungsaggregat (2) befestigt ist und mittels der das Bearbeitungsaggregat in einer Raumrichtung verfahrbar ist. Bei der dargestellten Führungsanordnung (5) spricht man von der "ersten Führungsanordnung", da das Bearbeitungsaggregat ohne Zwischenschaltung einer weiteren Führungsanordnung direkt an dieser befestigt ist. In der Regel führt die erste Führungsanordnung (5) eine vertikale Bewegung aus, anhand der das Werkzeug an das zu bearbeitende Werkstück zugestellt werden kann. Im gezeigten Ausführungsbeispiel umfasst das dynamische Element (3) die Werkzeugspindel (4), eine Lagerung der Werkzeugspindel, ein Getriebe und eine Antriebseinheit. Die Schwingungsdämpfungsvorrichtung (6) ist so ausgeführt, dass das elastische Stützelement (9) in Form einer Haltekonsole ausgebildet ist, die das dynamische Element (3) in der horizontalen Ebene umschließt und an einen Führungsschlitten (11) der Führungsanordnung (5) befestigt ist. Dadurch das die Haltekonsole lediglich anhand eines dünnen Blechs ohne jegliche Versteifungen ausgebildet ist, weist die Haltekonsole (elastisches Stützelement (9)) eine ausreichend hohe Elastizität auf, um die Hilfsmasse (8), die an der Vorderseite der Haltekonsole mittig zu dem dynamischen Element (3) angeordnet ist, von dem dynamischen Element (3) größtenteils zu entkoppeln. D.h., eine Ausbreitung der kritischen Schwingungen des dynamischen Elements (3) auf die Hilfsmasse (8) wird so gut wie möglich unterbunden. Bei der Bestimmung der Elastizität des elastischen Stützelements (9) muss jedoch ein Kompromiss zwischen ausreichend hoher Elastizität zur Schwingungsentkopplung dynamisches Element (3) - Hilfsmasse (8) und einer ausreichend hohen Steifigkeit des elastischen Stützelements (9) zur Unterbindung eines Nachschwingens der Elemente der Schwingungsdämpfungsvorrichtung (9) während des Verfahrens (Beschleunigen - Abbremsen) des Bearbeitungsaggregates, gefunden werden. Daher besteht auch die Möglichkeit, die Haltekonsole selbst steifer auszubilden und stattdessen zwischen der Haltekonsole und dem Führungsschlitten ein elastisches Element zur Schwingungsentkopplung vorzusehen. Unter der kritischen Schwingung (kritische Frequenz) wird die Eigenfrequenz der Grundmaschine (z.B. Grundgestell mit Führungsanordnungen) verstanden, unter der eine Resonanz in der Grundmaschine entstehen könnte, und sich damit eine Schwingungs-Erhöhung in der Grundmaschine aufbauen könnte.

Die Hilfsmasse (8) ist modular aufgebaut, d.h., die Hilfsmasse (8) besteht aus einzelnen Gewichtsplatten die modular an der Haltekonsole befestigt werden können, um die Masse der Hilfsmasse entsprechend den Bearbeitungsparametern und/oder gemessenen Schwingungsdaten einstellen zu können.

In der in Fig. 1 dargestellten Ausführungsform ist lediglich eine Schwingungsdämpfungsvorrichtung (6) mit einer horizontalen Wirkrichtung vorgesehen. D.h., die Dämpfungselemente (7) der Schwingungsdämpfungsvorrichtung (6) wirken in horizontaler Richtung. Wie in Fig. 1 gezeigt, weist die beispielhafte Schwingungsdämpfungsvorrichtung (6) zwei Dämpfungselemente (7) auf, die an zwei sich gegenüberliegenden Seiten der Haltekonsole vorgesehen sind, und somit von zwei sich entgegengesetzten Richtungen eine Dämpfungskraft auf das dynamische Element (3) ausführen.

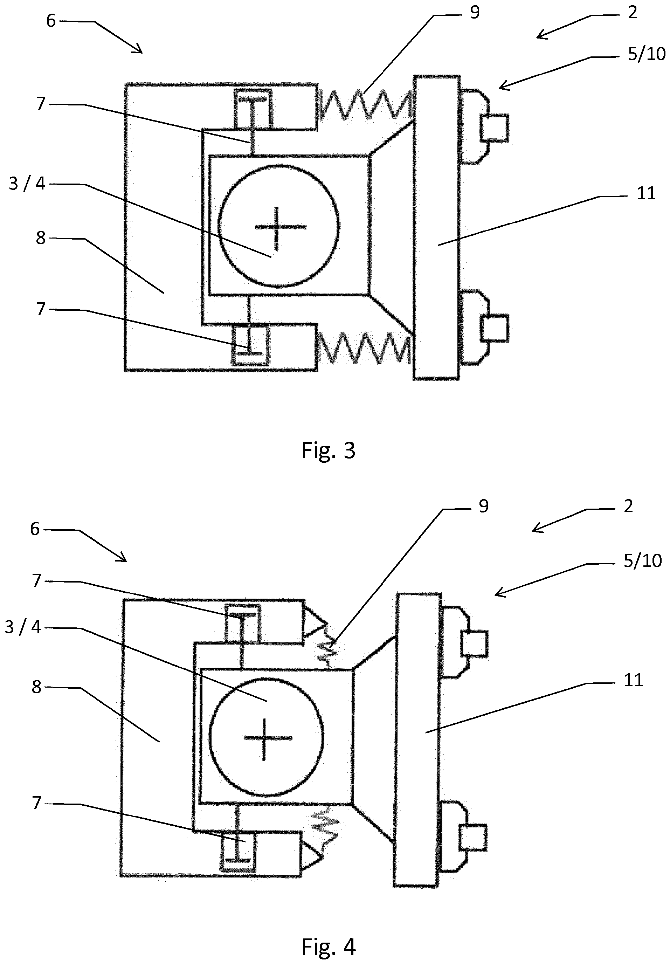

Nachfolgend werden anhand von schematischen Darstellungen, die in den Fig. 3 bis 6 gezeigt sind, verschiedene Ausführungsformen der Schwingungsdämpfungsvorrichtung (6) der vorliegenden Erfindung in Ihrem Grundaufbau erläutert.

Fig. 3 zeigt schematisch im Wesentlichen den gleichen Aufbau wie bereits in Fig. 1 im Detail beschrieben. Bei dieser Ausführungsform ist das elastische Stützelement (9) am Führungsschlitten (11) der Führungsanordnung (5) befestigt und entkoppelt die Hilfsmasse (8) vom dynamischen Element (3). Wie in Fig. 2 gezeigt, ist es auch möglich, die Dämpfungselemente (7) direkt an der Hilfsmasse (8) zu befestigen oder in dieser zu lagern. Die Dämpfungselemente (7) können an jedem Bauteil des dynamischen Elements (3) (Schwingungserreger) angreifen, bevorzugt ist es, dass die Dämpfungselemente (7) direkt an der Lagerung der Werkzeugspindel angreifen, um die passive Dämpfung noch direkter auszubilden.

Fig. 4 zeigt eine weitere Ausführungsform der Schwingungsdämpfungsvorrichtung (6) gemäß der vorliegenden Erfindung. In dieser Ausführungsform ist im Gegensatz zu der in Fig. 3 dargestellten Ausführungsform das elastische Stützelement (9) direkt an dem dynamischen Element (3) befestigt, was eine kompaktere Bauweise ermöglicht, jedoch eine Entkopplung der Hilfsmasse (8) von den kritischen Schwingungen des dynamischen Elements (3) erschwert.

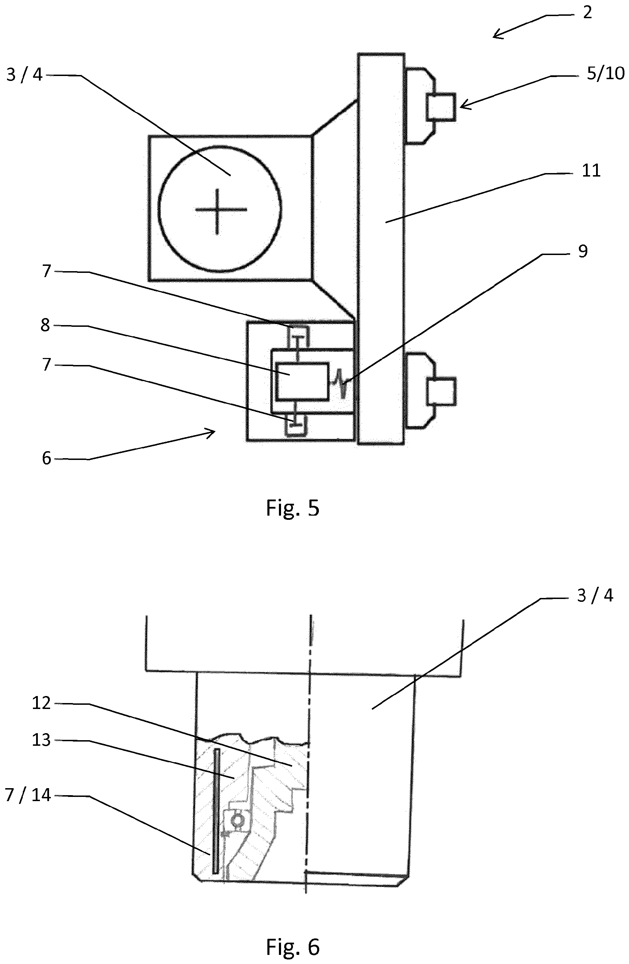

Fig. 5 zeigt eine andere Ausführungsform der Schwingungsdämpfungsvorrichtung (6), die nicht beansprucht wird. Im vorliegenden Fall ist die Schwingungsdämpfungsvorrichtung (6) nicht wie in den oben beschriebenen Ausführungsformen um das dynamische Element (3) herum ausgebildet, was es ermöglicht, dass die Dämpfungskräfte der Dämpfungselemente (7) direkt an dem dynamischen Element (3) angreifen, sondern ist vollständig in den Führungsschlitten (11) integriert bzw. an diesen angebaut. Wie der Fig. 5 entnommen werden kann, bietet dies den Vorteil, dass die Schwingungsdämpfungsvorrichtung extrem kompakt ausgebildet werden kann. Ferner ist die Entkopplung der Hilfsmasse (8) von den kritischen Schwingungen des dynamischen Elements (3) verhältnismäßig einfach. Wie gezeigt kann in diesem Fall die Hilfsmasse (8) schwingend zwischen den zwei Dämpfungselementen (7) angeordnet werden, und lediglich mittels des elastischen Stützelements (9) an dem Führungsschlitten (11) befestigt werden. Die Dämpfungselemente (7) wiederum sind anhand einer Aufnahmekonsole mit dem Führungsschlitten verbunden und können somit kritische Schwingungen des dynamischen Elements (3) mittelbar dämpfen, bevor diese sich auf weitere Bauteile der Bearbeitungsvorrichtung (Grundmaschine) ausbreiten.

Fig. 6 zeigt wiederum eine andere Ausführungsform der Schwingungsdämpfungsvorrichtung (6) der vorliegenden Erfindung. Wie der Fig. 6 entnommen werden kann, wird gemäß dieser Ausführungsform die Schwingungsdämpfungsvorrichtung (6) vollständig in das dynamische Element (3), insbesondere direkt in die Werkzeugspindel (4) integriert. Hierbei wird die Werkzeugspindel (4) aus zwei Elementen, einem zylinderförmigen Innenteil (12) und einem hohlzylinderförmigen Außenteil (13) ausgebildet, wobei das Außenteil (13) auf dem Innenteil (12) gelagert ist und der Hilfsmasse (8) entspricht. Wie gezeigt wird das Dämpfungselement (7) bzw. die Dämpfungselemente (7) in das Außenteil (13) integriert, bevorzugt in Umfangsrichtung am Außenteil (13) gleichmäßig verteilt. Aufgrund des geringen Bauraums bietet es sich wie dargestellt an, das Dämpfungselement (7) in Form eines hydraulischen Dämpfungsspalts auszubilden. Der Dämpfungsspalt weist aufgrund der Fluidreibung eine Dämpfungswirkung auf. Da das Außenteil (13) sowie die Lagerung des Außenteils (13) auf dem Innenteil (12) verhältnismäßig weich ist, und das Außenteil (13) durch den hydraulischen Dämpfungsspalt weiter geschwächt ist, kann das Außenteil (13) sich leicht unter Schwingungserregung durch das Innenteil (12) elastisch verformen, wodurch das in dem Dämpfungsspalt vorhandene Fluid bewegt wird, und damit Reibarbeit leistet, die die auftretenden Schwingungen dämpft.

Ferner kann bei dieser Ausführungsform das Außenteil (13) mit einem Reservoir (nicht dargestellt) versehen sein, in welches das vorhandene Fluid verdrängt werden kann, um die sich bewegende Fluidmenge zu erhöhen, und damit die Dämpfungsleistung zu steigern. Bevorzugt wird der hydraulische Dämpfungsspalt relativ schmal und lange ausgebildet, um die Fluidreibung zu fördern.

## Patentansprüche

1. Bearbeitungsvorrichtung (1), insbesondere CNC-Bearbeitungsmaschine, zur Bearbeitung von bevorzugt plattenförmigen Werkstücken (W), die bevorzugt zumindest abschnittsweise aus Holz, Holzwerkstoff, Kunststoff und/oder Glas bestehen, umfassend
ein Bearbeitungsaggregat (2) mit einem dynamischen Element (3), das bevorzugt eine drehbare Werkzeugspindel (4) umfasst,
eine erste Führungsanordnung (5), mittels der das Bearbeitungsaggregat (2) in einer Raumrichtung verfahrbar ist, und
mindestens eine Schwingungsdämpfungsvorrichtung (6), wobei
mittels der mindestens einen Schwingungsdämpfervorrichtung (6) Schwingungen des dynamischen Elements (3) passiv dämpfbar sind,
**dadurch gekennzeichnet, dass**
die mindestens eine Schwingungsdämpfungsvorrichtung (6) in Form einer Schwingungstilgervorrichtung ausgebildet ist, die zumindest ein Dämpfungselement (7), eine Hilfsmasse (8) und ein elastisches Stützelement (9) umfasst, wobei das elastische Stützelement (9) das Dämpfungselement (7) und die Hilfsmasse (8) trägt, oder
die Schwingungsdämpfungsvorrichtung (6) in der Werkzeugspindel (4) des Bearbeitungsaggregates (2) integriert ist, wobei die Werkzeugspindel (4) ein zylinderförmiges Innenteil (12) und ein hohlzylinderförmiges Außenteil (13) aufweist, das Außenteil (13) auf dem Innenteil (12) gelagert ist, das Außenteil (13) einer Hilfsmasse (8) entspricht und ein Dämpfungselement (7) enthält, wobei bevorzugt das Dämpfungselement (7) in Form eines hydraulischen Dämpfungsspalts ausgebildet ist.

2. Bearbeitungsvorrichtung (1) nach Anspruch 1, bei der die mindestens eine Schwingungsdämpfungsvorrichtung (6) auf der dem dynamischen Element (3) zugewandten Seite der ersten Führungsanordnung (5) oder an der ersten Führungsanordnung (5) vorgesehen ist.

3. Bearbeitungsvorrichtung (1) nach Anspruch 1 oder 2, bei der das elastische Stützelement (9) direkt an dem dynamischen Element (3) oder an der ersten Führungsanordnung (5) befestigt ist.

4. Bearbeitungsvorrichtung (1) nach einem der vorhergehenden Ansprüche, bei der eine Dämpfungskraft des zumindest einen Dämpfungselements (7) direkt auf das dynamische Element (3) wirkt oder die Dämpfungskraft des zumindest einen Dämpfungselement (7) mittelbar auf das dynamische Element (3) wirkt.

5. Bearbeitungsvorrichtung (1) nach einem der vorhergehenden Ansprüche, bei der das zumindest eine Dämpfungselement (7) ein hydraulischer Stoßdämpfer, ein mechanischer Stoßdämpfer, ein Wirbelstromdämpfer, ein elektromechanischer Wandlerwerkstoff oder ein hydraulischer Dämpfungsspalt ist.

6. Bearbeitungsvorrichtung (1) nach einem der vorhergehenden Ansprüche, bei der die erste Führungsanordnung (5) eine Führungsvorrichtung (10) umfasst, die bevorzugt in Form einer Linearführung ausgebildet ist, wobei die Führungsvorrichtung (10) bevorzugt einen Führungsschlitten (11) umfasst, an dem das Bearbeitungsaggregat (2) befestigt ist, um in einer Raumrichtung verfahrbar zu sein, und die Schwingungsdämpfungsvorrichtung (6) an dem Führungsschlitten (11) vorgesehen ist.

7. Bearbeitungsvorrichtung (1) nach einem der vorhergehenden Ansprüche, bei der eine Masse der Hilfsmasse (8) und/oder die Dämpfungscharakteristik des Dämpfungselements (7) und/oder eine Steifigkeit des elastischen Stützelements (9) einstellbar ist, insbesondere entsprechend den vorliegenden Bearbeitungsparametern und/oder dem verwendeten Werkzeug und/oder gemessenen Schwingungsdaten einstellbar ist/sind.

8. Bearbeitungsvorrichtung (1) nach einem der vorhergehenden Ansprüche, bei der mindestens zwei Schwingungsdämpfungsvorrichtungen (6) vorgesehen sind, welche zwei unterschiedliche Wirkrichtungen aufweisen, die in einer gemeinsamen Ebene liegen, wobei die beiden Schwingungsdämpfungsvorrichtungen (6)bevorzugt um das dynamische Element (3) herum angeordnet sind.

9. Bearbeitungsvorrichtung (1) nach einem der vorhergehenden Ansprüche, bei der drei Schwingungsdämpfungsvorrichtungen (6) vorgesehen sind, welche drei unterschiedliche Wirkrichtungen aufweisen, und in zwei sich schneidenden Ebenen liegen, wobei die drei Schwingungsdämpfungsvorrichtungen (6) bevorzugt um das dynamische Element (3) herum angeordnet sind.

10. Verfahren zum Betreiben einer Bearbeitungsvorrichtung (1), insbesondere der Bearbeitungsvorrichtung (1) nach einem der Ansprüche 1 bis 9, wobei anhand des Verfahrens Schwingungen eines dynamischen Elements (3) eines Bearbeitungsaggregates (2), die während der Bearbeitung eines Werkstücks (W) entstehen, mittels einer Schwingungsdämpfungsvorrichtung (6) passiv gedämpft werden, wobei
die mindestens eine Schwingungsdämpfungsvorrichtung (6) in Form einer Schwingungstilgervorrichtung ausgebildet ist, die zumindest ein Dämpfungselement (7), eine Hilfsmasse (8) und ein elastisches Stützelement (9) umfasst, wobei das elastische Stützelement (9) das Dämpfungselement (7) und die Hilfsmasse (8) trägt, oder
die Schwingungsdämpfungsvorrichtung (6) in der Werkzeugspindel (4) des Bearbeitungsaggregates (2) integriert ist, wobei die Werkzeugspindel (4) ein zylinderförmiges Innenteil (12) und ein hohlzylinderförmiges Außenteil (13) aufweist, das Außenteil (13) auf dem Innenteil (12) gelagert ist, das Außenteil (13) einer Hilfsmasse (8) entspricht und ein Dämpfungselement (7) enthält, wobei bevorzugt das Dämpfungselement (7) in Form eines hydraulischen Dämpfungsspalts ausgebildet ist.

11. Verfahren nach Anspruch 10, bei dem das Verfahren ferner umfasst:
- Ermitteln von Bearbeitungsparametern, wie z.B. Vorschubgeschwindigkeit, Schnittgeschwindigkeit, Schnitttiefe, Schnittkraft, Drehzahl des Werkzeugs, Art des Werkzeugs, usw., und/oder
Ermitteln von durch das dynamische Element (3) auftretender Schwingungen, bevorzugt anhand von Schwingungsaufnehmern,
- Ermitteln von optimalen Einstellparametern der
Schwingungsdämpfungsvorrichtung (6), wie z.B. Masse der Hilfsmasse (8), Dämpfungscharakteristik des Dämpfungselements (7), Steifigkeit des elastischen Stützelements (9), usw., und
- Einstellen der optimalen Einstellparameter der
Schwingungsdämpfungsvorrichtung.

12. Verfahren nach Anspruch 11, beim dem das Ermitteln der optimalen Einstellparameter der Schwingungsdämpfungsvorrichtung (6) basierend auf den ermittelten Bearbeitungsparametern und/oder den ermittelten auftretenden Schwingungen erfolgt, wobei bevorzugt die ermittelten Bearbeitungsparameter und/oder ermittelten auftretenden Schwingungen mit empirisch ermittelten Werten und/oder anhand von Simulationen ermittelten Werten verglichen werden und entsprechend die optimalen Einstellparameter bestimmt werden.

13. Verfahren nach Anspruch 11 oder 12, bei dem das Einstellen der optimalen Einstellparameter manuell, motorisch oder elektromechanisch erfolgt.

## Claims

1. Machining device (1), in particular a CNC machine tool, for machining preferably panel-formed workpieces (W) which preferably consist at least partially of wood, wood-based materials, plastic and/or glass, comprising
a machining unit (2) with a dynamic element (3) which preferably comprises a rotatable tool spindle (4),
a first guide arrangement (5) by means of which the machining unit (2) is moveable in a spatial direction, and
at least one vibration-damping device (6), wherein
vibrations of the dynamic element (3) can be damped passively by means of the at least one vibration-damping device (6),
**characterised in that**
the at least one vibration-damping device (6) is designed in the form of a vibration absorber device which comprises at least one damping element (7), an auxiliary mass (8) and an elastic support element (9), wherein the elastic support element (9) carries the damping element (7) and the auxiliary mass (8), or
the vibration-damping device (6) is integrated in the tool spindle (4) of the machining unit (2), wherein the tool spindle (4) has a cylindrical inner part (12) and a hollow cylindrical outer part (13), the outer part (13) is mounted on the inner part (12), the outer part (13) corresponds to an auxiliary mass (8) and contains a damping element (7), wherein the damping element (7) is preferably designed in the form of a hydraulic damping gap.

2. Machining device (1) according to claim 1, wherein the at least one vibration-damping device (6) is provided on the side of the first guide arrangement (5) facing the dynamic element (3) or on the first guide arrangement (5).

3. Machining device (1) according to claim 1 or 2, wherein the elastic support element (9) is fastened directly to the dynamic element (3) or to the first guide arrangement (5).

4. Machining device (1) according to one of the preceding claims, wherein a damping force of the at least one damping element (7) acts directly on the dynamic element (3) or the damping force of the at least one damping element (7) acts indirectly on the dynamic element (3) .

5. Machining device (1) according to one of the preceding claims, wherein the at least one damping element (7) is a hydraulic shock absorber, a mechanical shock absorber, an eddy current damper, a electromechanical transducer material or a hydraulic damping gap.

6. Machining device (1) according to one of the preceding claims, wherein the first guide arrangement (5) comprises a guide device (10) which is preferably designed in the form of a linear guide, wherein the guide device (10) preferably comprises a guide carriage (11) to which the machining unit (2) is fastened so as to be moveable in a spatial direction, and the vibration-damping device (6) is provided on the guide carriage (11).

7. Machining device (1) according to one of the preceding claims, wherein a mass of the auxiliary mass (8) and/or the damping characteristic of the damping element (7) and/or a stiffness of the elastic support element (9) is/are adjustable, in particular according to the current machining parameters and/or the tool being used and/or measured vibration data.

8. Machining device (1) according to one of the preceding claims, wherein at least two vibration-damping devices (6) are provided which have two different effective directions which lie in a common plane, wherein the two vibration-damping devices (6) are preferably arranged around the dynamic element (3).

9. Machining device (1) according to one of the preceding claims, wherein three vibration-damping devices (6) are provided which have three different effective directions lying in two intersecting planes, wherein the three vibration-damping devices (6) are preferably arranged around the dynamic element (3).

10. Method for operating a machining device (1), in particular the machining device (1) according to one of the claims 1 to 9, wherein, with the aid of the method, vibrations of a dynamic element (3) of a machining unit (2) which occur during the machining of a workpiece (W) are passively damped by means of a vibration-damping device (6), wherein
the at least one vibration-damping device (6) is designed in the form of a vibration absorber device which comprises at least one damping element (7), an auxiliary mass (8) and an elastic support element (9), wherein the elastic support element (9) carries the damping element (7) and the auxiliary mass (8), or
the vibration-damping device (6) is integrated in the tool spindle (4) of the machining unit (2), wherein the tool spindle (4) has a cylindrical inner part (12) and a hollow cylindrical outer part (13), the outer part (13) is mounted on the inner part (12), the outer part (13) corresponds to an auxiliary mass (8) and contains a damping element (7), wherein the damping element (7) is preferably designed in the form of a hydraulic damping gap.

11. Method according to claim 10, wherein the method further comprises:
- determining machining parameters, for example feed speed, cutting speed, cutting depth, cutting force, rotational speed of the tool, type of tool etc., and/or
- determining vibrations caused by the dynamic element (3), preferably with the aid of vibration sensors,
- determining optimal adjustment parameters of the vibration-damping device (6), for example mass of the auxiliary mass (8), damping characteristic of the damping element (7), stiffness of the elastic support element (9) etc., and
- adjusting the optimal adjustment parameters of the vibration-damping device.

12. Method according to claim 11, wherein the optimal adjustment parameters of the vibration-damping device (6) are determined based on the determined machining parameters and/or the determined occurring vibrations, wherein the determined machining parameters and/or determined occurring vibrations are preferably compared with empirically determined values and/or values determined with the aid of simulations and the optimal adjustment parameters determined accordingly.

13. Method according to claim 11 or 12, wherein the adjustment of the optimal adjustment parameters takes place manually, by motorised means or electromechanically.

## Revendications

1. Dispositif d'usinage (1), en particulier machine d'usinage CNC, pour l'usinage de pièces (W) de préférence en forme de plaque, qui sont de préférence constituées, au moins par endroits de bois, de matériaux dérivés du bois, de plastique et/ou de verre, comprenant
un groupe d'usinage (2) avec un élément dynamique (3), qui comprend de préférence une broche d'outil rotative (4),
un premier agencement de guidage (5), au moyen duquel le groupe d'usinage (2) peut être déplacé dans une direction spatiale, et
au moins un dispositif d'amortissement de vibrations (6),
dans lequel
les vibrations de l'élément dynamique (3) peuvent être amorties passivement au moyen de l'au moins un dispositif amortisseur de vibrations (6),
**caractérisé en ce que**
l'au moins un dispositif d'amortissement de vibrations (6) est réalisé sous forme d'un dispositif amortisseur de vibrations, qui comprend au moins un élément d'amortissement (7), une masse auxiliaire (8) et un élément de support élastique (9), dans lequel l'élément de support élastique (9) supporte l'élément d'amortissement (7) et la masse auxiliaire (8), ou
le dispositif d'amortissement de vibrations (6) est intégré dans la broche d'outil (4) du groupe d'usinage (2), dans lequel la broche d'outil (4) présente une partie intérieure (12) cylindrique et une partie extérieure (13) cylindrique creuse, la partie extérieure (13) est montée sur la partie intérieure (12), la partie extérieure (13) correspond à une masse auxiliaire (8) et contient un élément d'amortissement (7), dans lequel l'élément d'amortissement (7) est de préférence réalisé sous forme d'un espace d'amortissement hydraulique.

2. Dispositif d'usinage (1) selon la revendication 1, dans lequel l'au moins un dispositif d'amortissement de vibrations (6) est prévu sur la face du premier agencement de guidage (5) orientée vers l'élément dynamique (3) ou sur le premier agencement de guidage (5).

3. Dispositif d'usinage (1) selon la revendication 1 ou 2, dans lequel l'élément de support élastique (9) est fixé directement sur l'élément dynamique (3) ou sur le premier agencement de guidage (5).

4. Dispositif d'usinage (1) selon l'une quelconque des revendications précédentes, dans lequel une force d'amortissement de l'au moins un élément d'amortissement (7) agit directement sur l'élément dynamique (3) ou la force d'amortissement de l'au moins un élément d'amortissement (7) agit indirectement sur l'élément dynamique (3).

5. Dispositif d'usinage (1) selon l'une quelconque des revendications précédentes, dans lequel l'au moins un élément d'amortissement (7) est un amortisseur hydraulique, un amortisseur mécanique, un amortisseur à courants de Foucault, un matériau transducteur électromécanique ou un espace d'amortissement hydraulique.

6. Dispositif d'usinage (1) selon l'une quelconque des revendications précédentes, dans lequel le premier agencement de guidage (5) comprend un dispositif de guidage (10) qui est de préférence réalisé sous forme d'un guidage linéaire, dans lequel le dispositif de guidage (10) comprend de préférence un chariot de guidage (11) sur lequel est fixé le groupe d'usinage (2) de manière à pouvoir être déplacé dans une direction spatiale, et le dispositif d'amortissement de vibrations (6) est prévu sur le chariot de guidage (11).

7. Dispositif d'usinage (1) selon l'une quelconque des revendications précédentes, dans lequel une masse de la masse auxiliaire (8) et/ou la caractéristique d'amortissement de l'élément d'amortissement (7) et/ou une rigidité de l'élément de support élastique (9) est/sont réglable(s), en particulier selon les paramètres d'usinage présents et/ou l'outil utilisé et/ou les données de vibrations mesurées.

8. Dispositif d'usinage (1) selon l'une quelconque des revendications précédentes, dans lequel au moins deux dispositifs d'amortissement de vibrations (6) sont prévus, lesquels présentent deux directions d'action différentes qui se situent dans un plan commun, dans lequel les deux dispositifs d'amortissement de vibrations (6) sont de préférence disposés autour de l'élément dynamique (3).

9. Dispositif d'usinage (1) selon l'une quelconque des revendications précédentes, dans lequel trois dispositifs d'amortissement de vibrations (6) sont prévus, lesquels présentent trois directions d'action différentes et se situent dans deux plans croisés, dans lequel les trois dispositifs d'amortissement de vibrations (6) sont de préférence disposés autour de l'élément dynamique (3).

10. Procédé de fonctionnement d'un dispositif d'usinage (1), en particulier du dispositif d'usinage (1) selon l'une quelconque des revendications 1 à 9, dans lequel, à l'aide du procédé, des vibrations d'un élément dynamique (3) d'un groupe d'usinage (2), qui se produisent pendant l'usinage d'une pièce (W), sont amorties passivement au moyen d'un dispositif d'amortissement de vibrations (6), dans lequel
l'au moins un dispositif d'amortissement de vibrations (6) est réalisé sous forme d'un dispositif amortisseur de vibrations, qui comprend au moins un élément d'amortissement (7), une masse auxiliaire (8) et un élément de support élastique (9), dans lequel l'élément de support élastique (9) supporte l'élément d'amortissement (7) et la masse auxiliaire (8), ou
le dispositif d'amortissement de vibrations (6) est intégré dans la broche d'outil (4) du groupe d'usinage (2), dans lequel la broche d'outil (4) présente une partie intérieure (12) cylindrique et une partie extérieure (13) cylindrique creuse, la partie extérieure (13) est montée sur la partie intérieure (12), la partie extérieure (13) correspond à une masse auxiliaire (8) et contient un élément d'amortissement (7), dans lequel l'élément d'amortissement (7) est de préférence réalisé sous forme d'un espace d'amortissement hydraulique.

11. Procédé selon la revendication 10, dans lequel le procédé comprend en outre :
- la détermination de paramètres d'usinage, par ex. vitesse d'avance, vitesse de coupe, profondeur de coupe, force de coupe, vitesse de rotation de l'outil, type d'outil, etc., et/ou
la détermination de vibrations produites par l'élément dynamique (3), de préférence au moyen de capteurs de vibrations,
- la détermination de paramètres de réglage optimaux du dispositif d'amortissement de vibrations (6), par ex. masse de la masse auxiliaire (8), caractéristique d'amortissement de l'élément d'amortissement (7), rigidité de l'élément de support élastique (9), etc., et
- le réglage des paramètres de réglage optimaux du dispositif d'amortissement de vibrations.

12. Procédé selon la revendication 11, dans lequel la détermination des paramètres de réglage optimaux du dispositif d'amortissement de vibrations (6) s'effectue sur la base des paramètres d'usinage déterminés et/ou des vibrations produites déterminées, dans lequel de préférence les paramètres d'usinage déterminés et/ou les vibrations produites déterminées sont comparés à des valeurs déterminées empiriquement et/ou à des valeurs déterminées à l'aide de simulations et les paramètres de réglage optimaux sont déterminés en conséquence.

13. Procédé selon la revendication 11 ou 12, dans lequel le réglage des paramètres de réglage optimaux s'effectue de manière manuelle, motorisée ou électromécanique.
